(19) **Europäisches Patentamt**

**European Patent Office**

**Office européen des brevets**

(11) **EP 0 709 128 B1**

(12) **EUROPÄISCHE PATENTSCHRIFT**

(45) Veröffentlichungstag und Bekanntmachung des Hinweises auf die Patenterteilung:
**28.05.2003 Patentblatt 2003/22**

(51) Int Cl.[7]: **B01D 53/64**

(21) Anmeldenummer: **95103118.6**

(22) Anmeldetag: **04.03.1995**

(54) **Verfahren zum Entfernen von Quecksilber aus einem quecksilberhaltigen Abgas**

Process for the removal of mercury from a mercury containing gas

Procédé pour éliminer le mercure d'un gaz contenant du mercure

(84) Benannte Vertragsstaaten:
**AT BE DE DK ES FR GB IT NL**

(30) Priorität: **25.10.1994 DE 4437781**

(43) Veröffentlichungstag der Anmeldung:
**01.05.1996 Patentblatt 1996/18**

(73) Patentinhaber: **Holste, Reinhard**
**51647 Gummersbach (DE)**

(72) Erfinder:
• **Kubisa, Ryszard, Dr.**
**D-51645 Gummersbach (DE)**
• **Hillen, Rudolf**
**D-51647 Gummersbach (DE)**
• **Holste, Reinhard**
**D-51647 Gummersbach (DE)**

(56) Entgegenhaltungen:
**WO-A-89/08493     DE-A- 4 123 258**
**DE-A- 4 208 355     US-A- 4 591 490**

• **NEBEL ET AL: 'Mercury control systems' SOLID WASTE & POWER September 1992 - Oktober 1992, Seiten 40 - 50**
• **GUTBERLET: "Verhalten von Quecksilber im Rauchgaspfad eines Kohlekraftwerkes", 10. November 1992, IUTA, DUISBURG**
• **KÜRZINGER: "Quecksilber in Verbrennungsanlagen", 10. November 1992, IUTA, DUISBURG**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Verfahren zum Entfernen von Quecksilber aus einem quecksilberhaltigen, staubhaltigen und gegebenenfalls weitere gasförmige Schadkomponenten enthaltenden Abgas, bei dem das Quecksilber mit Hilfe eines in das Abgas eingebrachten Natriumpolysulfids als ein Quecksilbersulfid überführt wird.

In dem Abgas von Verbrennungsanlagen, insbesondere Müllverbrennungsanlagen, findet sich Quecksilber im wesentlichen in der Form von Quecksilber(II)-chlorid und von metallischem Quecksilber. Das metallische Quecksilber tritt in hohen Konzentrationen im Abgas von Klärschlammverbrennungsanlagen auf. Das Abscheiden von Quecksilber(II)-chlorid erfolgt in vielen Fällen in Naßwaschsystemen zusammen mit sauren Schadgaskomponenten, da die zweiwertige Quecksilberkomponente gut wasserlöslich ist, insbesondere im sauren pH-Bereich. Eine Absorption von metallischem Quecksilber in sauren oder neutralen Wäschern ist nicht möglich. Hg(0) wird lediglich in oxidierenden Waschlösungen gut absorbiert.

Es ist bekannt, dem Abgas vor Eintritt in einem HCl-Wäscher Natriumpolysulfide $Na_2S_x$ oder Natriummonosulfid $Na_2S$ zuzugeben, um wasserunlösliche Quecksilberverbindungen zu erreichen (vgl. DE-PS 41 23 258). Diese wasserunlöslichen

Verbindungen werden in einem dem HCl-Wäscher nachgeschalteten $SO_2$-Wäscher mit dem Gips ausgeschieden und von diesem mit dem Abwasser abgetrennt. Die wasserunlöslichen Quecksilberverbindungen werden aus dem

Abwasser abgeschieden.

WO89/08493A zeigt ein Verfahren gemäß dem Oberbegriff des Anspruchs 1.

Es ist die Aufgabe der vorliegenden Erfindung, ein Verfahren anzugeben, bei dem ionisches und metallisches Quecksilber mit vertretbarem Aufwand im wesentlichen aus dem Abgas abgeschieden werden.

Diese Aufgabe wird gelöst durch die Merkmale des Anspruchs 1.

Die Erfindung geht von der Erkenntnis aus, daß durch Zugabe von Natriumtetrasulfid in das Abgas ein Lieferant für kolloidalen Schwefel und für ionischen Schwefel vorliegt und daß die sich bildenden Feststoffe auf einfache Weise mittels eines Staubfilters abgetrennt werden können, auf dessen Filterelement sich eine Schicht des abgeschiedenen Materials bildet. Diese Schicht stellt sicher, daß das ionische und metallische Quecksilber sicher abgeschieden wird, auch wenn die Strecke zwischen dem Eindüsungsort der Natriumtetrasulfidlösung und dem Staubfilter als Reaktionsstrecke noch nicht ausreicht. Nachreaktionen finden in der Staubschicht statt.

Vorzugsweise wird als schichtbildender Staubfilter ein Gewebefilter eingesetzt. Wenn der Staubeintrag mit dem zu reinigenden Gas selbst zur Schichtbildung nicht ausreicht, wird ein Teil des vom Staubfilter abgeschiedenen Feststoffes zurückgeführt.

Wenn als weitere Schadkomponente HCl vorhanden ist, ist vorgesehen, daß das Gas nach dem Staubfilter in eine HCl-Wäsche eintritt.

Wenn das Abgas auch noch $SO_2$ enthält, ist vorgesehen, daß das Gas nach der HCl-Wäsche einer $SO_2$-Wäsche unterzogen wird. Wenn es bei der Zugabe von Natriumtetrasulfid zur. Bildung von Schwefelwasserstoff kommt, wird dieser in den nachfolgenden Wäschern absorbiert, und zwar zu einem geringeren Teil im sauren Wäscher und zu einem größeren Teil in dem für die $SO_2$-Wäsche vorgesehenen neutralen Wäscher. Kritische $H_2S$-Emissionen bei Handhabung der Waschflüssigkeit oder bei Leckage sind nicht zu erwarten.

Falls das Gas einen zu hohen Staubgehalt aufweist, ist vorgesehen, daß das Gas vor dem Eindüsen der wässrigen Natriumtetrasulfidlösung teilweise entstaubt wird, vorzugsweise durch einen Elektrofilter.

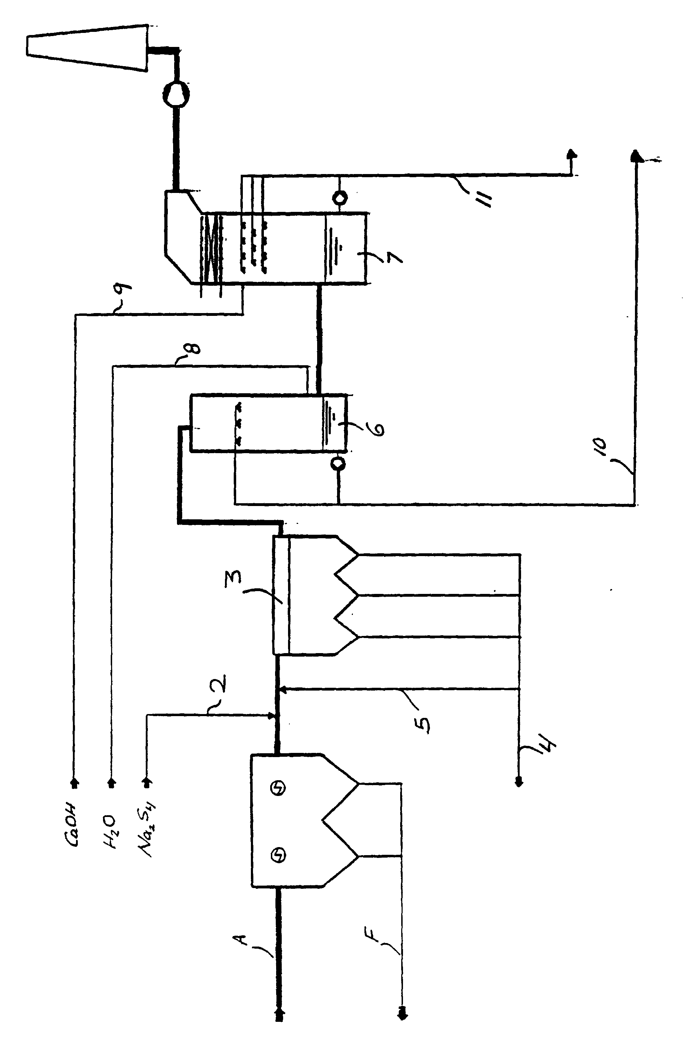

Die Erfindung soll nun anhand der beigefügten Figur näher erläutert werden.

Zunächst ist festzuhalten, daß die Abscheidemechanismen vereinfacht durch folgende Reaktionen dargestellt werden können, wobei davon ausgegangen wird, daß das Abgas als weitere gasförmige Schadkomponente HCl enthält:

(i) $\quad Na_2S_4 + 2\,HCl \rightarrow 3\,S + H_2S + 2\,NaCl$

(ii) $\quad Hg^{2+} + S^{2-} \rightarrow HgS$

(iii) $\quad Hg(0) + S \rightarrow HgS$

Vergleichbare kolloidalen Schwefel und Schwefelwasserstoff liefernde Reaktionen treten auch bei den Schadstoffkomponenten $SO_2$ und HF auf, wobei jedoch davon ausgegangen werden kann, daß die Reaktion mit HCl überwiegt.

Auch falls keine weiteren gasförmigen Schadkomponenten vorhanden sind, kann das erfindungsgemäße Verfahren zum Erfolg führen, da das Natriumtetrasulfid nach Einbringen in den Abgasstrom zu $Na_2S$ + 3 S zerfällt. Der im Abgas stets vorhandene Wasserdampf sorgt dann dafür, daß aus dem Natriumsulfid $S^{2-}$ Ionen freigesetzt werden.

Bei den Gleichungen (i)-(iii) dient das Natriumtetrasulfid als Lieferant für kolloidalen Schwefel und Schwefelwasserstoff. Der Schwefelwasserstoff stellt gemäß (ii) ionischen Schwefel zur Verfügung, der mit dem Quecksilber(II)- in einer schnellen Ionenreaktion zu Quecksilberfulfid reagiert. Die Umsetzung des metallischen Quecksilbers Hg(0) erfolgt mit dem freien Schwefel S. Das Reaktionsprodukt HgS ist ein Feststoff und wird an dem Staubfilter abgeschieden.

Bei dem in der Figur dargestellten Verfahrensschema wird davon ausgegangen, daß das zugeführte Abgas A einen zu hohen Staubgehalt aufweist, so daß es zunächst über einen Elektrofilter 1 geführt wird, von dem die abgeschiedene Flugasche F einem Flugaschesilo zugeführt wird. Nach dem Verlassen des E-Filters wird in das einen Reststaubgehalt aufweisende Abgas eine Natriumtetrasulfidlösung über Leitung 2 eingesprüht. Nach einer vorgegebenen Reaktionsstrecke tritt das Abgas in einen Gewebefilter 3 ein, auf dessen Gewebeflächen sich eine Feststoffschicht aus Reststaub und gebildetem $H_2S$ abscheidet. Ein Teil der im Gewebefilter 3 abgeschiedenen Feststoffe wird über Leitung 4 abgezogen und kann z.B. auf eine Deponie geführt werden. Ein Teil der Feststoffe wird über Leitung 5 rezirkuliert. Die Rezirkulation dient zum einen dazu, daß kolloidaler Schwefel S, der sich in der Staubschicht abgeschieden hat und noch nicht mit Quecksilber reagiert hat, erneut in die Reaktionsstrecke eingebracht wird. Zum anderen ist die Rezirkulation erforderlich, wenn das Abgas A selbst einen so geringen Staubgehalt hat, daß es nicht zu einer ausreichenden Schichtbildung im Gewebefilter 3 kommt. Es ist möglich, die abgeschiedenen Feststoffe direkt in den Rauchgaskanal stromauf des Gewebefilters einzublasen, oder es wird mit den Feststoffen eine wäßrige Suspension angesetzt und diese Suspension stromauf des Gewebefilters eingesprüht.

Es wurde festgestellt, daß aus dem einem nachgeschalteten HCl-Wäscher 6 zugeführten Abgas ganz wesentliche Teile an ionischem Quecksilber (z.B. 97-99 %) und metallischem Quecksilber (z.B. 93-97 %) der jeweiligen Rohgaskonzentration entfernt worden sind.

Aus dem HCl-Wäscher tritt das Abgas in einen $SO_2$-Wäscher 7 ein und wird von dort - gegebenenfalls noch nach einer Entstickung - über einen Kamin abgeführt. Dem HCl-Wäscher 6 wird über Leitung 8 Wasser und dem $SO_2$-Wäscher 7 über Leitung 9 Kalkmilch zugeführt. Waschflüssigkeit aus dem HCl-Wäscher 6 wird über Leitung 10 einer HCl-Aufbereitung und Suspensi-on aus dem $SO_2$-Wäscher über Leitung 11 einer

Gipsaufbereitung zugeführt.

**Patentansprüche**

1. Verfahren zum Entfernen von Quecksilber aus ei-nem quecksilberhaltigen, staubhaltigen und gege-benenfalls weitere gasförmige Schadkomponenten enthaltenden Abgas, bei dem das Quecksilber mit Hilfe einer in das Abgas eingesprühten wäßrigen Natriumsulfidlösung in Quecksilbersulfid überführt wird und danach das Abgas über einen schichtbildenden Staubfilter geführt wird,
   **dadurch gekennzeichnet,**
   **daß** in das Abgas eine Natriumtetrasulfidlösung (2) eingesprüht wird.

2. Verfahren nach Anspruch 1,
   **dadurch gekennzeichnet,**
   **daß** als schichtbildender Staubfilter ein Gewebefilter (3) eingesetzt wird.

3. Verfahren nach Anspruch 1 oder 2,
   **dadurch gekennzeichnet,**
   **daß** ein Teil des vom Staubfilter (3) abgeschiedenen Feststoffes (5) zurückgeführt wird.

4. Verfahren nach mindestens einem der Ansprüche 1-3,
   **dadurch gekennzeichnet,**
   **daß** das Gas nach dem Staubfilter (3) in eine HCl-Wäsche (6) eintritt.

5. Verfahren nach Anspruch 4,
   **dadurch gekennzeichnet,**
   **daß** das Gas nach der HCl-Wäsche (6) einer $SO_2$-Wäsche (7) unterzogen wird.

6. Verfahren nach mindestens einem der Ansprüche 1-5,
   **dadurch gekennzeichnet,**
   **daß** das Gas vor dem Eindüsen der wäßrigen Natriumtetrasulfidlösung (2) teilweise entstaubt wird, vorzugsweise durch einen Elektrofilter (1).

7. Verfahren nach mindestens einem der Ansprüche 1-6,
   **dadurch gekennzeichnet,**
   **daß** eine höchstens 40 %ige, vorzugsweise eine 10-20 %ige Lösung (2) eingedüst wird.

**Claims**

1. Method for removing mercury from a mercurial, dusty and possibly other gaseous noxious components containing exhaust gas, in which the mercury is converted into mercury sulphide with the help of an aqueous solution of sodium sulphide sprayed in-to the exhaust gas, and then the exhaust gas is passed over a stratifying dust filter,
   **characterized in that**,
   a solution of sodium tetrasulphide (2) is sprayed into the exhaust gas.

2. Method according to Claim 1,
   **characterized in that**,
   a fabric filter (3) is employed as the stratifying dust filter.

3. Method according to Claim 1 or 2,
   **characterized in that**,
   that part of the solid material (5) precipitated by the dust filter (3) is recycled.

**4.** Method according to one or more of Claims 1-3, **characterized in that**, the gas enters an HCl scrubber (6) downstream from the dust filter (3).

**5.** Method according to Claim 4, **characterized in that**, that the gas undergoes $SO_2$ scrubbing (7) after the HCl scrubber (6).

**6.** Method according to one or more of Claims 1-5, **characterized in that**, the gas is partially freed of dust before the aqueous solution of sodium tetrasulphide (2) is injected, preferably by means of an electrostatic filter (1).

**7.** Method according to one or more of Claims 1-6, **characterized in that**, That a not more than forty-percent solution, but preferably a ten to twenty percent solution (2), is injected.

**Revendications**

**1.** Procédé pour éliminer le mercure contenu dans des gaz d'échappement à teneur en mercure, à teneur en poussières et éventuellement en autres composants nocifs gazeux, par lequel le mercure est transformé à l'aide d'une solution aqueuse au sulfure de sodium injectée par pulvérisation dans les gaz d'échappement, en sulfure de mercure puis acheminé vers les gaz d'échappement au travers d'un filtre à poussières à stratification, **caractérisé par le fait** qu'une solution au tétrasulfure de sodium (2) soit injectée par pulvérisation dans les gaz d'échappement.

**2.** Procédé selon la revendication 1, **caractérisé par le fait** qu'un filtre tissé (3) soit utilisé comme filtre à poussières à stratification.

**3.** Procédé selon la revendication 1 ou 2, **caractérisé par le fait** qu'une partie des substances solides (5) déposées dans le filtre à poussières (3) soit recyclée.

**4.** Procédé selon au moins l'une des revendications 1-3, **caractérisé par le fait** que le gaz pénètre dans un bain au HCl (6) après le filtre à poussières (3).

**5.** Procédé selon la revendication 4, **caractérisé par le fait** que le gaz soit soumis après le bain au HCl (6) à un bain au $SO_2$ (7).

**6.** Procédé selon au moins l'une des revendications 1-5, **caractérisé par le fait** que le gaz avant l'injection de la solution aqueuse au tétrasulfure de sodium (2) soit partiellement dépoussiéré, de préférence par un électrofiltre (1).

**7.** Procédé selon au moins l'une des revendications 1-6, **caractérisé par le fait** qu'une solution avec 40% au maximum, de préférence entre 10 et 20% (2) soit injectée.